# EUROPEAN PATENT SPECIFICATION

(11) **EP 2 839 250 B1**
(45) Date of publication and mention of the grant of the patent: **29.04.2020**
(21) Application number: 13729428.6
(22) Date of filing: 17.04.2013
(51) Int. Cl.: G01D 4/00, G01F 15/06

(54) **STATIC GAS METER WITH MEASURES TRANSMISSION SYSTEM AND RELATED TRANSMISSION METHOD**
STATISCHER GASZÄHLER MIT MASSNAHMENÜBERTRAGUNGSSYSTEM UND ZUGEHÖRIGES ÜBERTRAGUNGSVERFAHREN
COMPTEUR STATIQUE DE GAZ À SYSTÈME DE TRANSMISSION DE MESURES ET PROCÉDÉ DE TRANSMISSION ASSOCIÉ

(30) Priority: 17.04.2012 IT MI20120627; 17.04.2012 IT MI20120631
(43) Date of publication of application: 25.02.2015
(73) Proprietor: Metersit S.r.l., 35129 Padova (IT)
(72) Inventor: RAMOLINI, Angelo, I-21040 Cislago (VA) (IT); GIACOSI, Andrea, I-20146 Milan (IT)
(74) Representative: Di Bernardo, Antonio
(86) International application number: PCT/IB2013/053045
(87) International publication number: WO 2013/156945

(56) References cited:
- EP-A1- 1 742 373
- EP-A1- 2 075 553
- GB-A- 2 277 416
- US-A1- 2005 159 905

## Description

### TECHNICAL FIELD

The present invention relates to gas meters of the static type, and particularly to static gas meters of the type comprising a radio transmitter for the communication with an external communication network.

The invention particularly relates to a static gas meter according to the preamble of claim 1.

### PRIOR ART

In the last years static gas meters (typically using a mass flow meter) have been developed, wherein flow measurement occurs by an electronic sensor, for example an ultrasound one or a solid state one (of the MEMS type), arranged inside a measuring compartment that, by means of a suitable valve, puts the national gas distribution network in connection with the consumer service pipe.

While in the conventional meters (or diaphragm meters) the measurement occurred mechanically (Volume Measurement), and even the consumption reading occurred by a mechanical system that did not require a power supply (at least for small sizes), the static meters require a battery power supply able to power the measurement sensor (and the relevant management electronics) for a high numbers of years, as necessary accordingly to the legal life of the meter seal.

This has required a considerable attention in developing technical (electronic, circuit, management) solutions with a low power consumption that should be consistent with the use of chemical batteries, an ideal solution in order to guarantee long periods of operation and existence in service.

The problem of power consumptions is still more serious for those gas meters (both mass or volume ones) that have to communicate the measurement of the consumptions to a remote central system. In Italy, for example, the Comitato Italiano Gas (Italian Gas Committee, CIG), the body in charge of the technical standards, has established that the communication can be performed by means of public radiotelephone networks in point-to-point applications (GPRS/GSM) or by RF-MBus wireless communication at 169MHz; therefore this requires the meter to be provided with a transmitter and the battery/batteries to have such a capacity for supplying both the transmitter and all the control, management and data collecting electronics in the meter, for a suitable number of years.

The European patent Application EP2075553 entitled "Battery driven consumption meter with voltage converter", describes a gas meter provided with a radio transmitter for transmitting the measurements of the gas consumptions. The meter is powered by a battery, and, in order to reduce the energy consumptions, it suggests to use a voltage regulator for supplying the radio circuit with a voltage lower than that of the battery.

In order to monitor remote instruments (such as gas/water meters), the patent application US2005/0159905 describes a system providing to use a device, called "data link", equipped with a sensor interface for the connection to the reading instrumentation of the monitored devices. The "data link" further provides a radio transmission system powered by a battery through a voltage regulator. A control unit of the data link receives the data from the sensor interface and it controls a transmission system for transmitting the data. All the circuits of the "data link" are connected downstream of the voltage regulator. In order to save energy, the voltage regulator is intermittently operated.

### OBJECTS AND SUMMARY OF THE INVENTION

The object of the present invention is to provide a static gas meter of the innovative type allowing the life of the battery/batteries to be optimized.

Particularly the object of the present invention is to optimize the life of the battery in a static gas meter provided with a system for transmitting the consumption measurements.

These and other objects of the present invention are achieved by a static gas meter and a method for transmitting the consumption measurements embodying the characteristics of the annexed claims, which are an integral part of the present invention.

The idea at the base of the present invention is to power the transmission system of the meter only by means of the energy stored by a charging pack, and to charge this charging pack in a controlled manner by regulating the voltage at the ends of the charging pack. Particularly the idea provides to use a booster, controlled by the meter control unit, for charging the charging pack.

This solution contemporaneously allows the life of the charging pack and the life of the battery to be extended, since the transmission of the consumption measurements does not require energy by the battery (during the transmission), which therefore is not stressed by unexpected requirements of high currents (characteristics of the listed transmission types) that would damage its intrinsic life; the controlled charging of the charging pack, then prevents a high voltage from being maintained on it for a long period (corresponding to the time period between one consumption transmission and another one) which otherwise would reduce the intrinsic life and would worsen the physical characteristics thereof over time.

In one embodiment, the control unit detects the charge voltage at the ends of the charging pack and it controls a booster circuit so as to bring the charge voltage from the detected value to a predetermined value, higher than the power supply voltage supplied by the battery, within a predetermined transmission time.

Thus the charging of the charging pack is optimized, the stored energy being proportional to the square of the voltage value at its ends.

In a further embodiment, the booster circuit is adapted to limit the current supplied to the charging pack; thus the battery is protected as it has not to supply sudden current peaks when the charging pack is exhausted and/or during the transmission. Moreover the charging of the charging pack occurs slowly, and by appropriately calculating the charging time necessary for storing the energy necessary for the transmission of the consumption measurements, it is possible to keep for a short time the charging pack at its maximum charging value, so as to extend its intrinsic life (that depends on the value of the applied voltage and on the time it persists).

Preferably then the control unit is adapted to disconnect to booster circuit from the battery prior to or upon the transmission of the data. Then the control unit calculates the charging time necessary for bringing the charge voltage from the value detected after the transmission to the predetermined complete charging value, so as to activate again the connection to the battery at a specific time depending on the charging time and on the scheduled transmission time.

Even this solution provides to optimize the life of the components and to further reduce the consumptions.

In one embodiment, the meter comprises a dc to dc converter (of the buck type) connected between the charging pack and the transmission system for providing to the transmission system a constant power supply voltage lower than the charging one. The dc-dc converter is operatively connected to the control unit that is configured for controlling it so as to disconnect the transmission system from the battery pack when the transmission system is not in operation.

This solution optimizes the consumptions since, even when not in operation, the transmission system would dissipate energy taken from the charging pack both in a direct form as absorbed current, if switched on, and in a direct form as leakage current, if switched off or in sleeping mode.

Preferably the charging pack comprises N supercaps connected in series and the charging pack is brought to a predetermined charging value equal to NVmax, where N is an integer higher than or equal to 2, preferably equal to 2, and wherein Vmax is the maximum rated voltage supported by one of said supercaps without it being damaged or without it worsening its functional characteristics over time.

In the case a single capacitor is not enough for storing enough energy for the transmission, this choice guarantees to store enough energy for the transmission by optimizing the life of the components of the charging pack.

Then the invention relates to a method for transmitting measurements of the gas consumptions in a gas meter, the method comprising the steps of:
- generating a power supply voltage by means of a battery,
- charging in a controlled manner a charging pack so as to store a specific energy within a specific transmission time,
- at the transmission time, disconnecting the charging pack from the battery,
- transmitting measurements of consumptions by using only the energy stored into said charging pack.

Then advantageously the charging of the charging pack occurs by a voltage greater that the power supply voltage provided by the battery and with a constant controlled current.

Further objects and advantages of the present invention will be more clear from the following description.

### BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Figure 1 schematically is a static gas meter;
Figure 2 is a block diagram of the meter of figure 1 according to a second embodiment of the present invention;
Figure 3 is the charging cycles of the charging pack of the meter of figure 2 according to one embodiment;
Figure 4 is a block diagram of a static gas meter according to a second embodiment of the present invention;
Figure 5 is a block diagram of a static gas meter according to a third embodiment of the present invention;
Figure 6 is a current limiter for the gas meter;
Figure 7 is the consumptions measured by a static gas meter;
Figure 8 schematically is the architecture of the gas meter of the static type according to one embodiment;
Figure 9 schematically is the architecture of the static gas meter according to a further embodiment;
Figure 10 schematically is a static gas meter arranged into a housing and in communication with a telecommunication network;
Figure 11 is a solution alternative to that of figure 10 in order to allow the static gas meter to communicate;
Figure 12 is the detail of the connection between the battery and the power supply circuit of a static gas meter.
Figure 13 is a system for protection against electrostatic discharges of the static gas meter according to the present invention.

### DETAILED DESCRIPTION OF THE INVENTION

While the invention is susceptible of various modifications and alternative forms, some relevant preferred embodiments are shown in the drawings attached thereto and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc.", "or" indicates non-exclusive alternatives without limitation unless otherwise noted.

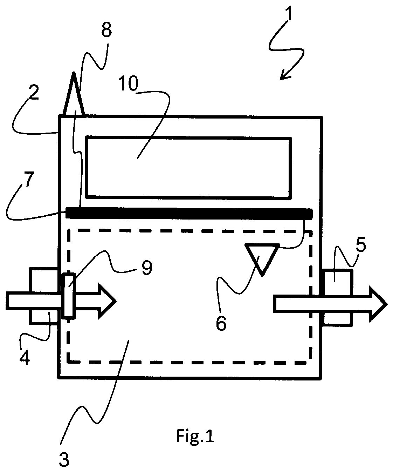

Figure 1 schematically shows a gas meter 1 of the static type.

The meter 1 comprises, in a known manner, a hollow body 2 defining a measuring compartment 3 provided with an inlet pipe 4 and an outlet pipe 5 for the passage of the gas (shown by the arrows in fig.1) that, from the pipe network, has to go to the user.

A sensor 6, arranged inside the measuring compartment, detects the gas flow required by the user. The sensor 6 is connected to a control unit 7 that processes the measurements of the sensor, stores the measurement value and it transmits it by activating a transmitter 8.

By a suitable actuator 90, the control unit then controls a valve 9, inside the meter, that opens or closes the gas passage from the pipe network to the user service pipe. Then the meter is provided with a LCD display 10 for an operator to read the consumption measurement.

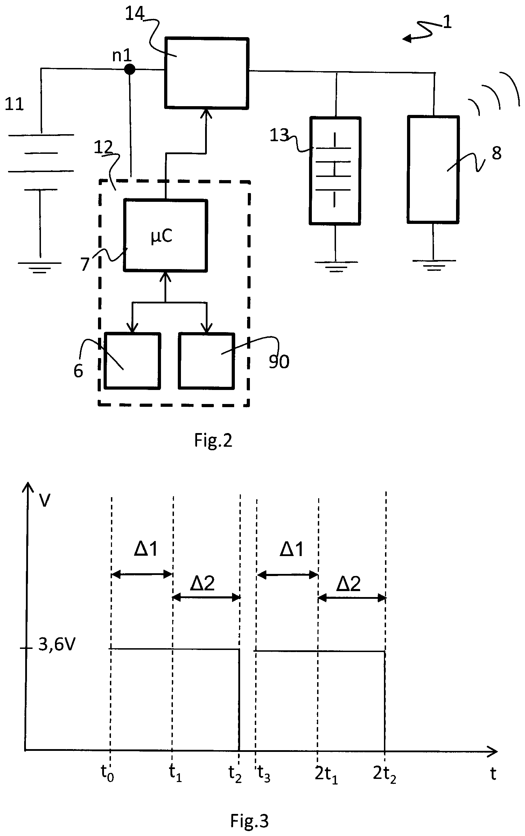

Figure 2 shows a block diagram of the meter 1, according to a first embodiment of the present invention.

The meter 1 comprises a battery 11 with such a capacity to power all the electric/electronic components of the meter. In the preferred embodiment, the battery 11 is a lithium battery with a capacity of 19 Ah (type D) able to maintain at its ends a voltage of 3,6V for its entire useful life if the current required to it is limited to low and constant values.

The battery 11 is selected so as to operate within a wide range of temperatures, preferably ranging from -25°C to +55°C, this because the meter has to be able to be installed in places with very different environmental conditions (sea and mountain) and it has to withstand considerable thermal ranges (day/night, summer/winter). Usually batteries of this type are not able, without a considerable deterioration of the life intrinsic characteristics over time, to meet the requirements of instantaneous current required by the transmitter 8 (and by the inboard electronics, generally denoted by reference 12) for transmitting via radio the measurements of the meter for generally allowing utility companies to have the remote access thereto. For this reason, in parallel to the transmitter 8 a charging pack 13 is provided which is able to supply to the transmitter 8 the current it needs for the maximum established time for transmitting the amount of data defined by the specific connection.

In the preferred solution, the charging pack 13 is replaced by a plurality of capacitors in series, and particularly a plurality of super-capacitors (known by the English term *supercaps*), able to store the energy sufficient for operating the transmitter 8 for the time sufficient for communicating the measurement of the gas consumption and all the data about the management of the user over time.

Supposing the transmitter 8 is of the GPRS type, and in order to allow a suitable communication time, in the preferred embodiment two supercaps are used which are placed in series.

The voltage supplied from the battery 11 is supplied at the ends of the transmitter 8 and of the charging pack 13 through a voltage regulating circuit 14 controlled by the control unit 7 comprising a microcontroller.

In one embodiment, the regulating circuit 14 is an electronic switch (for example a transistor) that opens or closes the connection between the battery 11 and the charging pack 13. Thus the control unit 7 controls the charging cycles of the charging pack 13 and it keeps the energy consumptions under control as shown in figure 3. The control unit 7 is programmed for activating the transmitter and for transmitting the measurements of the sensor every t1 seconds, for example every 12 hours. The transmission lasts a time Δ2, e.g. 30s, depending on the amount of data to be transmitted and on the response time of the network the gas meter connects to, and it requires an average energy E1.

The control unit 7 controls the regulating circuit 14 and therefore it connects the charging pack 13 to the battery 11 at a moment t0, prior to time t1 of the beginning of the transmission. The time t0 is calculated by the control unit such that in the time t0-t1 (Δ1), the charging pack 13 is charged and it stores an energy higher than or equal to E1.

By this solution, when the charging pack 13 and the transmitter 8 are directly connected to the battery 11, the latter has to suddenly supply (high current peaks) many hundreds of milliamperes of current. This type of operation in the long run can damage the battery, that therefore has to be suitably dimensioned as regards both its power and its intrinsic life.

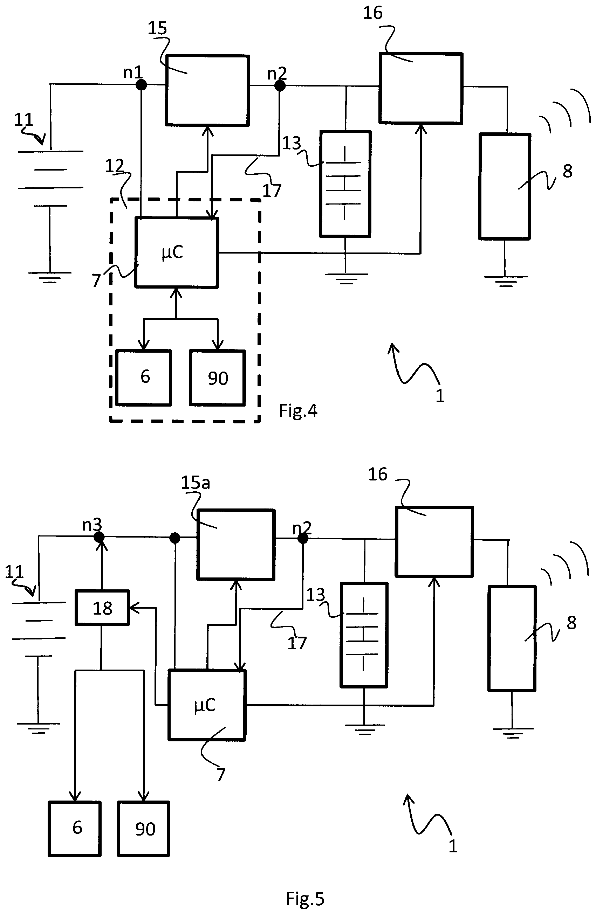

Such problem is solved by a different control of the charging and discharging cycles of the charging pack performed by the gas meter in figure 4.

In the solution of figure 4, the voltage control circuit 14 of figure 2 is replaced by two blocks, denoted by reference numbers 15 and 16, arranged upstream and downstream of the charging pack 13.

The block 15 is a controlled booster, able to perform two functions: to provide an output voltage higher than the input one and to limit the output current, that is the charging current of the charging pack 13.

When the control unit 7 activates the booster, the voltage supplied by the battery (3.6V) is risen to 4.8V such that the charging pack 13 charges more quickly till storing more energy than a charging with a voltage of 3.6V, the stored energy being proportional to the square of the voltage. The choice of the voltage of 4.8V depends on the intrinsic parameters of the supercaps of the charging pack 13, particularly, the booster 15 is controlled by the control unit 7 so as to provide an output voltage Vₒᵤₜ equal to NV_{MAX}, where V_{MAX} is the maximum voltage, according to specifications, that can be withstood by the supercap without being damaged, while N is the number of supercaps arranged in series in the charging pack 13. The choice of 4.8V is therefore optimal for a charging pack comprising two supercaps arranged in series and able to withstand a maximum voltage of 2,4 V guaranteeing the functional profile as regards electrical characteristics and quality over time.

In a preferred embodiment, the booster 15 is controlled so as to raise the output voltage gradually from a minimum value (in the example described here 3.6V) to a maximum one (in the example described here 4,8V); thus the control unit can be configured so as to raise the voltage at the ends of the charging pack 13 according to a raising curve that depends on the choice of the capacitors. In one preferred embodiment, the curve is selected such that 4.8V are kept for a relatively short time during the day (and typically only in anticipation of a scheduled transmission) so as to optimize the life of the capacitors.

The booster 15 is preferably controlled such that the voltage at the node n2 is always higher than or equal to the operating voltage of the transmitter 8, that in the example described here is equal to 3.6 V.

Besides raising the voltage the booster 15 limits the current required by the battery, and necessary for charging the supercaps, to a value suitable for optimizing the average life thereof. In the preferred embodiment, the current is limited to a value ranging from 3 to 5 mA, more preferably equal to 4 mA.

A reading circuit, outlined by line 17, reports to the control unit 7 the voltage at node n2, thus the control unit knows at each moment the voltage at the ends of the charging pack and it stops the booster when it detects a voltage equal to 4.8V. The frequency of such control over time is a programmable parameter.

In one embodiment, the transmitter 8 operates at 3.6V (with a minimum operation limit also lower and equal to 3.2V), therefore between the charging pack 13 and the transmitter 8 there is provided a DC/DC converter (*Buck converter*) that restores the voltage from 4.8V to a value useful for the operation of the transmitter, for example ranging from 3.3 V to 3.6V.

In a preferred embodiment, the control unit 7 controls the buck converter 16 by disconnecting the connection between the charging pack 13 and the transmitter 8 during the charging phases of the charging pack 13 so as to optimize them and to reduce the consumptions (and leakages) of the system.

So as in the example described above with reference to the figures 2 and 3, the control unit 7 disconnects the connection between the battery 11 and the charging pack 13 during the transmission of the consumption measurements (or each datum related thereto and stored in the memory of the electronics) by the transmitter 8 and more preferably for all the time when the charging pack 13 needs not to be charged; this is performed by controlling the booster 15. The control unit is programmed for transmitting the data by using the transmission module at a predetermined time moment T_{TR} (e.g. at a specific day and time in the day); before transmitting the data the control unit disconnects the booster circuit from the battery, such that the transmission takes place by using only the energy stored in the charging pack 13. After the transmission, the control unit 7 calculates the charging time ΔT necessary to bring the voltage value on the charging pack from the value detected after the transmission to 4.8 V necessary for storing the energy necessary for a following transmission. Once the charging time is known, the control unit activates again the connection to the battery at a time calculated depending on the charging time and on the transmission time, particularly the connection is restored and the charging starts at a time T_{IN}= T_{TR}-ΔT.

The use of the booster 15 and of the buck converter 16 controllable by the control unit 7, allows the charging pack 13 to be completely isolated, and the reading of the sensor to be kept stable. Should the measuring electronics and the control electronics directly be connected to the charging pack, the current peaks absorbed by the communication circuit during the transmission inevitably would cause serious voltage drops thereon disturbing or preventing them to operate. Particularly the fact of using a booster 15 that limits the current that can be required by the battery, prevents the sudden requirement of current by the transmitter 8 when it has to transmit from causing oscillations on the power supply voltage of the sensor changing the measurement in a non-predictable manner.

In one embodiment, shown in figure 5, the sensor 6 and the actuators 90 controlling the valve 9 are powered by a line provided with a current limiter 18 that starts from the node n3, such node being the node closest to the battery 11. That is to say, all the other devices of the meter take the power supply upstream of the sensors 6 and of the valve actuators 90.

The limiter 18 is necessary as a protection for limiting the energy flow towards the circuit part disposed in the gas environment (the sensor 6 and the valve 9) that, due also to faults leading to a short-circuit thereof, could potentially dissipate such an energy to trigger an explosion of the gas mixture.

In another, preferred, embodiment the valve actuators 90 are powered by the charging pack 13 and therefore they are connected thereto by a buck converter that can be controlled by the control unit such not to absorb or waste current when not in operation. In one embodiment, the actuators 90 are therefore connected downstream of the buck converter 16. This choice optimizes the average life of the battery 11, since such actuators (e.g. the motor of the valve 9) can require some dozens of milliamperes and so the battery can be stressed.

In a preferred embodiment the limiter 18 is a limiter controllable through an activation input (*enable*), for example the limiter 18 comprises an integrated limiting circuit of the type used in HDMI connections. This type of circuits however has some leakages (*leakage- leakage currents*) that can be reduced by sending on the enable input a signal for powering off the limiter, that, actually, sets at zero the output voltage from the limiter.

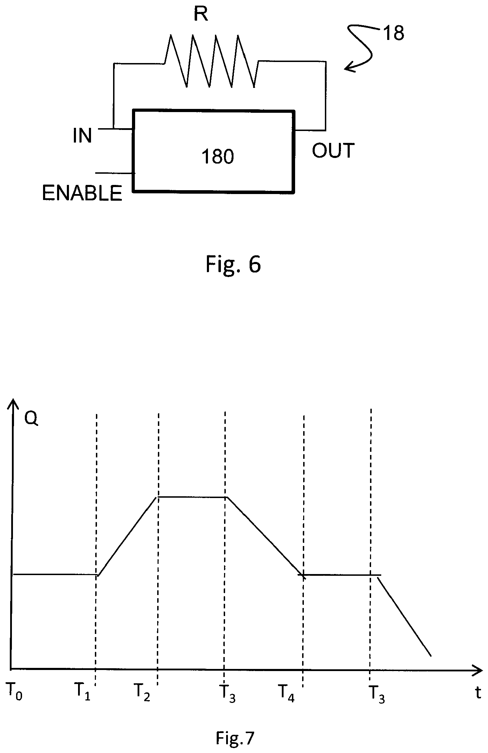

In the solution of figure 6, the limiter 18 comprises an integrated limiting circuit 180, of the type used in HDMI solutions, that, between the input and output pins, has a bypass resistance R with such a dimension for a current to pass which is just sufficient for maintaining the sensor in stand-by (which otherwise would be switched off and would require to be switched on at each measurement step); preferably such current is of few milliamperes, preferably 1µA.

This solution provides the advantage that the control unit 7 can be configured for effectively performing discrete flow measurements over time and contemporaneously reducing at the minimum the power dissipated in the steps between one and the other measurement.

In one embodiment, the control unit 7 disables the limiter 18 and it goes in a standby condition reducing the energy consumptions. After a predetermined time, for example 2s, an internal clock of the control unit 7 activates it again and in turn it activates the limiter 18 allowing the sensor to quickly leave the standby condition, so it can measure the flow gas in few µs. This would not be possible without the bypass resistance that powers the sensor when this latter does not measure and is in the low absorption condition, since by completely disabling the sensor, it would take more time to awake it, and as a consequence, this would result in a higher waste of energy associated to each awakening.

In an alternative solution, measurements are not taken regularly on the basis of a predetermined time, but they are taken by following a prediction algorithm that calculates, on the basis of the previous measurements, whether gas is currently used therefore it is better to perform measurements more frequent over time and/or measurements with a different accuracy and a consequent different energy balance. By way of example, when a user turns a cooker on for cooking, the control unit detects a gas flow higher than the previous measurements and so it decides that the following measurement has to be taken not after 2s but within a shorter time. The time interval is preferably chosen on the basis of the value of the measurement, or still better on the basis of the differential to the previous measurement.

In a preferred embodiment, the sensor 6 is able to perform measurements of two types: a QUICK measurement and an ACCURATE one. The latter is very accurate, but it requires a lot of energy, while the former is less accurate and requires less energy.

In this case, as an alternative or in combination with the regulation of the measurement intervals, it is possible to configure the control unit such that it requires ACCURATE measurements when it verifies a (positive or negative) derivative higher than a threshold value in the consumption curve. This is better shown with reference to the consumption curve shown in figure 7; at time T0 hot water is turned on and therefore the sensor detects, every 2s, a regular consumption; therefore the control unit controls the sensor in order to perform QUICK measurements. Then, at time T1 the user turns on the fire and so the consumptions raise till settling at the final value reached at time T2. Between T1 and T2 the control unit detects an increase in the consumptions and so it performs ACCURATE measurements. Once the consumptions are again constant, between T2 and T3, QUICK measurements are again performed. Then at time T3 the user turns the cooker off and then at time T5 also hot water is turned off. In time intervals T3-T4 and from T5 on ACCURATE measurements are required, while between T4 and T5 QUICK measurements are performed.

In a preferred embodiment, the choice between QUICK and ACCURATE measurements depends not only on the derivative of the consumptions, but also on the historical data used for reducing to the minimum amount necessary the number of ACCURATE measurements, which have the highest energy consumption. For example, it is known that gas distribution occurs not always in a constant manner, on the contrary it has a nonlinear pattern. The historical data can assist in understanding the periodicity of such pattern and in deciding that possible increases in the flow value measured depend on the pattern of the gas distribution and not on a real additional requirement of gas by the user; in this case the control unit will order to the sensor to perform QUICK measurements despite an increase in the consumptions detected between two successive measurements.

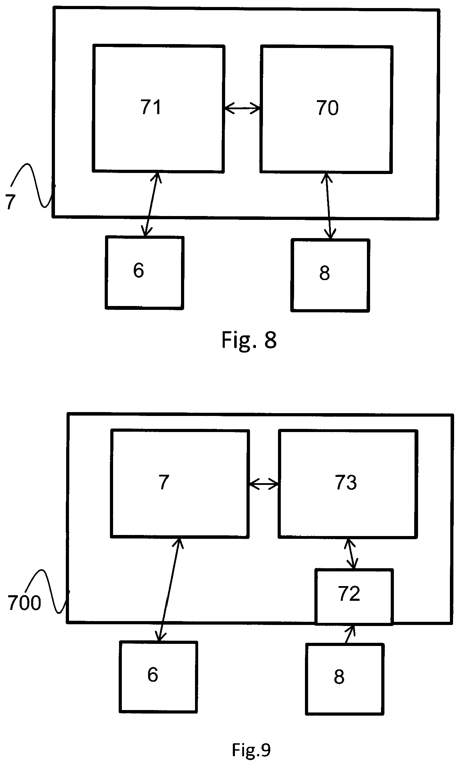

Figure 8 shows a preferred embodiment of the control unit 7. In this embodiment, the control unit comprises two microcontrollers, one (70) dedicated to the communication devices (e.g. transmitter 8) and one (71) dedicated to the metrology part of the gas meter (e.g. sensor 6) and the other most frequently used devices (e.g. display) and relevant to the so-called "Legally relevant" part of the metering apparatus.

Preferably the microcontrollers 70 and 71 are made with different architectures, particularly the microcontroller 71 that controls the measuring circuit (sensor 6), as it is used more frequently, is made with an architecture optimized for the low power (e.g. 8 bit) and therefore it uses a silicon area smaller than the other microcontroller 70, e.g. a 32 bit microcontroller.

The two microcontrollers 70 and 71 are put in communication, but the microcontroller 71 is equipped with a firmware identified by an identification code, for example a CRC code (Cyclic Redundancy Check) or digital signature. This solution allows the microcontroller 70 to be remotely updated always guaranteeing the possibility of checking the integrity of the microcontroller 71 and its firmware. Preferably both the microcontrollers are equipped with such identification code.

In a particularly advantageous embodiment, shown in figure 9 the control unit is provided with a dual port RFID receiver 72 comprising a nonvolatile rewritable memory for example a flash memory, a reading and writing circuit of the memory able to allow the memory to be read and written by a microprocessor external to the receiver and connected thereto through a data line, particularly a serial data line. Once the manufacturing of the meters is completed, in order to avoid subsequent handling of the meter, and particularly of its metrological software, the RFID receiver 72 is hit by a suitable RF modulated signal from which it extracts, in a known manner, the energy necessary for activating a small microprocessor 73 dedicated to data storage. The RFID interface of each meter is protected by a 32bit password, such that by irradiating several meters contemporaneously with a signal provided with a specific password, only one of such meters recognizes the password as valid and it is activated by loading the data transmitted with the signal irradiated. Particularly, the transmitted data comprise specific data of the meter (calibration coefficient of the sensor, various IDs of the meter such as serial number of the meter, serial number of the valve ecc..) and a code (sealing) that warns the meter that from now on it cannot be calibrated again anymore. The data received in this manner are stored into a nonvolatile memory, e.g. a flash memory, of the RFID receiver.

In the preferred embodiment, the RFID receiver directly supplies, by the energy obtained from the RF radiation, a small dedicated microcontroller 73, which sends a LOCK signal to the receiver locking the mechanisms of rewriting of the nonvolatile memory. Thus the possibility of modifying calibration parameters important for the operation of the meter is avoided.

In an alternative embodiment, that does not provide to use a dedicated microcontroller, the writing of the nonvolatile memory of the RFID receiver is locked at the first starting of the meter. When the meter is powered for the first time, the control unit 7 reads the data present into the memory of the RFID receiver and it sends the Lock command to the RFID receiver for preventing its memory from being re-written in the future. In this embodiment, the data written in the memory of the RFID interface, are encrypted in order to prevent them from being re-written during the transport phase or anyway before turning the meter on for the first time. This protection serves for covering the time between the exit of the meter from the plant to the first installation thereof.

Even if in the example of figure 9 the meter uses a single microcontroller 7, it is clear that the RFID system can be used also employing an architecture with two microcontrollers such as in the example of figure 8.

As said above, the gas meter is equipped with a transceiver 8 that receives and transmits data from/to a remote server, directly (GPRS connection) or by a concentration apparatus that manages several meters, and in turn it connects to the remote server through a GPRS connection.

There is the possibility that gas meters have to be installed in locations not covered by the radio network to which they have to be connected for transmitting data (e.g. a cellar), or they may be installed into a metal cabinet, that, shielding the meters, prevents them from being reached via radio.

In one embodiment, therefore the meter is provided with a transmission kit composed of a passive repeater system composed of two antennas calibrated and connected by a cable.

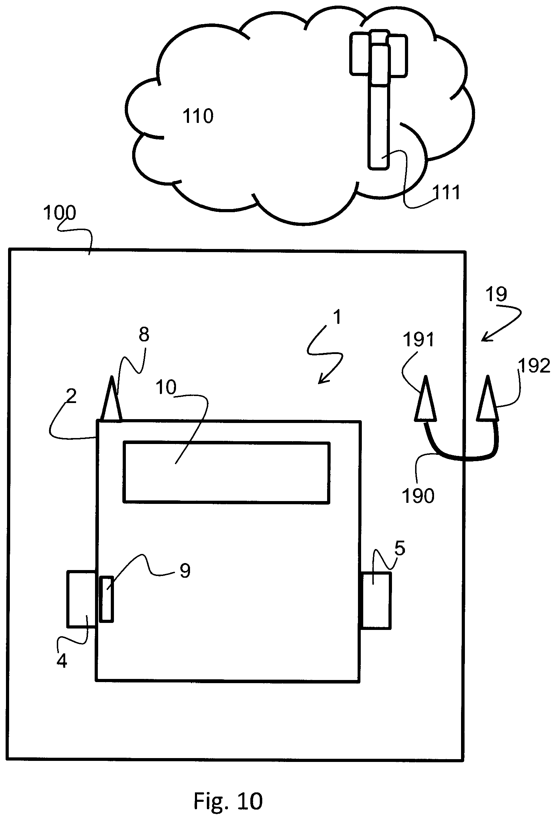

Figure 10 shows the meter 1 installed inside a cabinet 100 that has a metal shielding that would prevent the transmitter 8 of the meter and an access apparatus 111 of a communication network 110 from communicating.

The passive repeater system 19 is mounted 100 by passing the cable 190 connecting the two antennas 191 and 192 through an opening (possibly made during the installation phase by drilling a hole in the cabinet 100). In order to facilitate the mounting of the passive repeater system 19, at least one of the antennas 191, 192 is fastened to the cable 190 by a removable connector, more preferably both the antennas are provided with such connector, such that, depending on applications, it is possible to use cables of various lengths, or as an alternative to the cable, other antenna connection means, such as for example rigid connectors, that allow the two antennas to be put in direct contact.

The passive repeater system is provided with a mounting kit that comprises, for example, clamps for coupling the cable and/or the antennas to different surfaces. Operatively, the antenna of the transmitter 8 sends radio waves that are received by the antenna 191 of the passive repeater arranged inside the cabinet 100; the radio signal is then converted into an electric signal, that, through the cable, reaches the antenna 192 arranged outside the cabinet. This latter antenna, in turn, generates a radio signal due to the signal in the cable 190. The data transmitted from the antenna of the meter 1, in this manner, reach the access system of the network 110 and consequently a remote server.

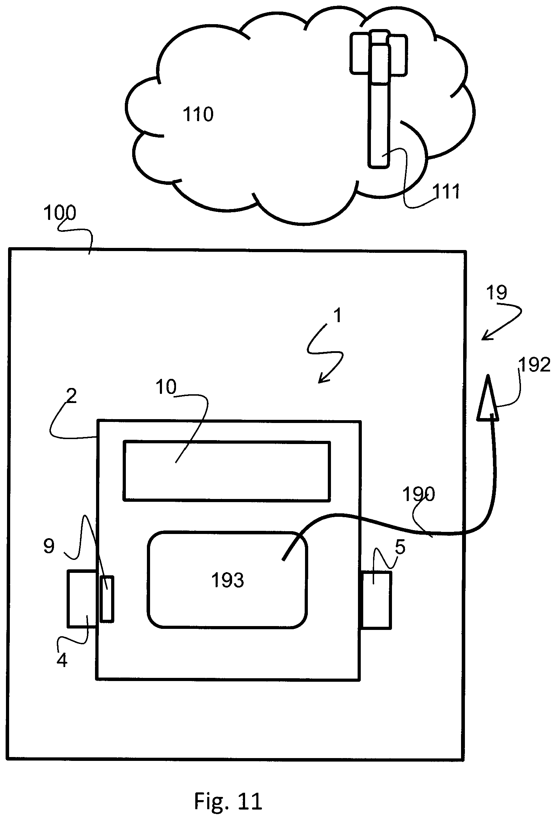

In a preferred embodiment, shown in figure 11, the meter 1 is not provided with an autonomous antenna for the transmission.

The passive repeater 19 comprises, instead, an antenna 193 embedded into a plastic body suitably shaped for coupling to the body of the container 1. Such body is provided, in addition to removable coupling means, with electrical connectors for the electrical connection of the antenna to the transceiver system (modulator, demodulator and antenna amplifier) of the meter 1.

As an alternative, instead of providing the antenna 193 to be coupled to the meter body, it is possible to integrate such antenna in the body of the meter and to provide a connector for the connection to the cable 190. In this embodiment, a part of the passive repeater system is integrated to the body of the meter.

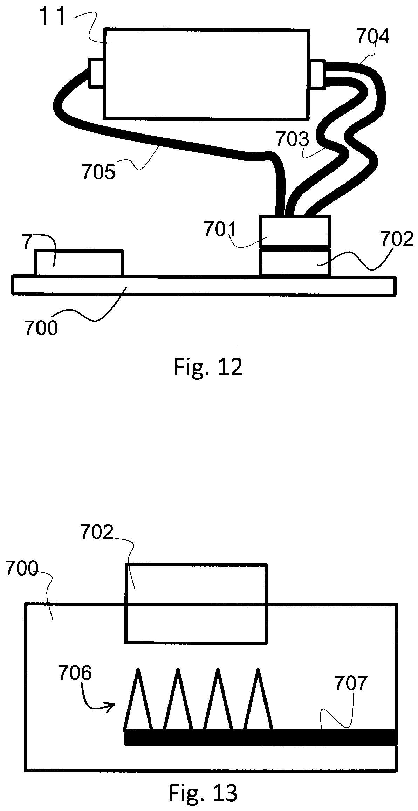

Figure 12 shows a detail of the battery 11 and of its connection to the PCB board 700 housing the control unit 7.

The regulations require the possibility of detecting the removal of the battery carried out by possible non authorized users. The conventional solution to be used in similar cases would provide an anti-tamper button that is activated if the cover of the battery compartment is removed with consequent mechanical complications and an increase in the costs.

In the embodiment of figure 12 the two poles of the battery 11 are cabled to a connector 701 adapted to be fitted into a corresponding connector 702 arranged on the PCB 700. The cabling of the battery 11 provides two ground cables 703 and 704 connected to the negative pole and individually brought to the power supply connector 701, and only one cable 705 going from the positive pole of the battery 11 to the connector 701.

Once the connector 701 is connected to the one 702, the cable 703 is actually used for performing the ground connection function, while the cable 704 brings again (by a line not shown in the figure) the ground itself to an input of the microprocessor such that it can detects the presence of the signal relevant to the ground connection.

This arrangement allows the removal of the battery to be detected without a microswitch intended for the purpose and therefore with a cost saving of mechanical parts.

Upon the removal of the battery the system is still powered by the charging pack 13, the control unit 7 detects a voltage change at the input connected to the cable 704 causing an alarm condition. Therefore the control unit uses the energy of the charging pack 13 to power the transmitter 8 and to send an alarm signal, for example a text message such as a SMS.

In a preferred embodiment, the meter is provided with a backup battery, usually not connected to the electric/electronic system, and it is able to allow the meter to operate for a specific time, for example two years.

When the control unit 7 detects a power supply voltage (e.g. at the node n1) falling below a threshold value, it connects (for example by operating a switch in the closing condition) the backup battery instead of the battery 11, such that it allows all the components to operate: from the sensor to the transmitter.

As an alternative the control unit can be arranged for transmitting an alarm signal or for displaying such signal on the display.

Still, in a further embodiment the meter can be provided with two batteries, one (e.g. a D type 19A battery) intended for powering the metrological components of the meter, and a smaller one (e.g. a B or D type battery) intended for powering the components of the meter in charge of the communication. In this embodiment the power supply circuits of the metrological part and of the communication part are separated, therefore there are no problems as regards the measurement as described above and resulting from the oscillation of the power supply voltage of the metrological sensor when the meter communicates the data or when the charging pack 13 has to be recharged.

Due to the energy requirements of the system, in one embodiment schematically shown in figure 13, there is implemented a system for the protection against electrostatic discharges (ESD) by designing a discharger 706 integrated on the printed circuit (PCB, 700) and by designing a preferred discharging path for the energy that in the example of figure 13 is depicted by a plurality of triangles whose upper vertex (opposite to the base) is faced towards the connector 702, and wherein the base of the triangle is connected to a ground line 707. Thus the negative effects of the electrostatic discharges are neutralized by deviating the energy to the ground (that is the system casing) and by saving the electronic circuits usually used for making dischargers (e.g. Zener diodes, Varistors, ecc) that, besides being a cost, they dissipate current. Preferably a triangle is provided for each pin of the connector 702. As an alternative to triangles, the discharger 706 can take different shapes, provided that there are provided tips faced towards the connector 702 so as to collect and convey electrostatic discharges, if any, to the ground.

In consideration of the detailed description set forth above, it is clear how the static gas meter described solves the prior art drawbacks and how it reaches the defined targets.

It is also clear that many variants can be made to the static meter described above and that different functions and elements of the meter described with reference to different embodiments, can be combined and used in several ways to form further embodiments of the meter. So circuit blocks and elements can be differently divided or grouped together.

## Claims

1. Static gas meter (1) comprising:
- a measuring circuit (6) for detecting a gas flow provided to a user,
- a wireless transmission system (8) for transmitting measurements made by the measuring circuit,
- a control unit (7) adapted to receive the measurements from the measuring circuit (6) and to control the wireless transmission system (8) for transmitting the measurements,
- a battery (11) adapted to generate a power supply voltage for supplying the control unit (7), the measuring circuit (6) and the wireless transmission system (8), **characterized in that** it further comprises
- a charging pack (13) in parallel to the transmission system (8) for storing energy to be released to the wireless transmission system (8) in case of need and
- a voltage regulating system (14, 15,16) operatively connected between the battery (11) and the charging pack (13),
and **in that** the measuring circuit (6) and the control unit (7) are operatively connected to the battery (11) so as to receive the power from the battery upstream of the voltage regulating system (14, 15, 16),
and **in that** the control unit (7) is adapted to control the voltage regulating system (14, 15, 16) so as to regulate the charging of the charging pack (13).

2. Meter according to claim 1, wherein the voltage regulating system (14,15,16) comprises a booster circuit for charging the charging circuit to a voltage higher than the power supply voltage provided by the battery (11).

3. Meter according to claim 2, wherein the control unit (7) is adapted to detect a charge voltage at the ends of the charging pack (13) and to control the booster circuit so as to bring the charge voltage from the detected value to a specific value, greater than the power supply voltage, within a specific transmission time.

4. Meter according to claim 3, wherein the booster circuit is adapted to limit the current supplied to the charging pack.

5. Meter according to claim 4, wherein the control unit is adapted to disconnect the booster circuit from the battery after said specific time, and once the transmission has occurred, to calculate a charging time period necessary to bring the charge voltage from the value detected after the transmission to said specific value and to restore the connection with the battery at a time defined as a function of said charging time period and of said transmission time.

6. Meter according to claim 4 or 5, further comprising a dc-dc converter connected between the charging pack and the transmission system in order to feed to the transmission system a constant power supply voltage lower than the charge one, said dc-dc converter being operatively connected to the control unit (7), said control unit being configured for controlling said dc-dc converter so as to disconnect the transmission system from the battery pack when the transmission system is not in operation.

7. Meter according to any of the preceding claims, wherein the charging pack comprises N supercaps connected in series and wherein said specific charge value is set at NVmax, where N is an integer greater or equal to 2, preferably equal to 2, and wherein Vmax is the maximum rated voltage supported by one of said supercaps without it being damaged.

8. Meter according to any of the preceding claims, wherein the control unit is adapted to go in standby and to wake up in order to take a measurement of the gas flow supplied to the user after a time period depending on the difference of the gas flows detected in at least two previous measurements, in particularly it is adapted to wake up more frequently if a gradient in the flows greater than a threshold is detected.

9. Meter according to any of the preceding claims, wherein the control unit comprises two microcontrollers connected to each other, a first microcontroller being dedicated to data transmission and a second microcontroller to metrology, wherein the second microcontroller has an architecture with power consumption lower than the first one.

10. Meter according to any of the preceding claims, wherein the measuring circuit (6) is connected to the battery by a current limiter (18) controllable by the control unit (7).

11. Meter according to claim 10, wherein the limiter (18) comprises a bypass resistance for not completely switching the sensor off but for maintaining it in standby.

12. Method for transmitting measurements of gas consumptions in the gas meter of any of the preceding claims, the method comprising the steps of:
- generating a power supply voltage by means of a battery,
- charging in a controlled manner the charging pack such to store a specific energy within a specific transmission time,
- at the transmission time, disconnecting the charging pack from the battery,
- transmitting measurements of consumptions by using only the energy stored into said charging pack.

13. Method according to claim 12, wherein the charging of the charging pack occurs by a voltage greater that the power supply one provided by the battery and with a constant controlled current.

## Patentansprüche

1. Statischer Gaszähler (1) umfassend:
- eine Messschaltung (6) zur Erfassung eines einem Benutzer zur Verfügung gestellten Gasdurchflusses,
- ein drahtloses Übertragungssystem (8) zum Übertragen von Messwerten, die von der Messschaltung ermittelt wurden,
- eine Steuereinheit (7), die derart eingerichtet ist, dass sie die Messwerte von der Messschaltung (6) empfängt und dass sie das drahtlose Übertragungssystem (8) zur Übertragung der Messwerte steuert,
- eine Batterie (11), die zur Erzeugung einer Versorgungsspannung zur Versorgung der Steuereinheit (7), der Messschaltung (6) und des drahtlosen Übertragungssystems (8) eingerichtet ist,
**dadurch gekennzeichnet, dass** er ferner umfasst
- ein parallel zum Übertragungssystem (8) geschaltetes Ladepack (13) zur Speicherung von Energie, die im Bedarfsfall für das drahtlose Übertragungssystem (8) freigesetzt werden soll und
- ein Spannungsregelungsystem (14, 15, 16), das operativ zwischen die Batterie (11) und das Ladepack (13) geschaltet ist,
und dass die Messschaltung (6) und die Steuereinheit (7) mit der Batterie (11) wirkverbunden sind, um die Spannung von der Batterie stromaufwärts von dem Spannungsregelungssystem (14, 15, 16) zu erhalten,
und dass die Steuereinheit (7) zur Steuerung des Spannungsregelungssystems (1415, 16) eingerichtet ist, um die Aufladung des Ladepacks zu regeln (13).

2. Zähler nach Anspruch 1, wobei das Spannungsregelungssystem (14, 15, 16) eine Booster-Schaltung zum Aufladen der Ladeschaltung auf eine Spannung umfasst, die höher ist als die von der Batterie (11) bereitgestellte Versorgungsspannung.

3. Zähler nach Anspruch 2, wobei die Steuereinheit (7) derart eingerichtet ist, dass sie eine Ladungsspannung an den Anschlüssen des Ladepacks (13) erkennt und dass sie die Booster-Schaltung derart steuert, dass die Ladungsspannung innerhalb einer bestimmten Übertragungszeit von dem erfassten Wert auf einen bestimmten Wert größer als die Versorgungsspannung gebracht wird.

4. Zähler nach Anspruch 3, wobei die Booster-Schaltung derart eingerichtet ist, dass sie den Strom begrenzt, der dem Ladepack zugeführt wird.

5. Zähler nach Anspruch 4, wobei die Steuereinheit so eingerichtet ist, dass sie die Booster-Schaltung nach der besagten bestimmten Zeit von der Batterie trennt, und dass sie, wenn die Übertragung aufgetreten ist, eine Ladezeitdauer berechnet, die notwendig ist, um die Ladespannung von dem nach der Übertragung ermittelten Wert auf den genannten bestimmten Wert zu bringen, und die Verbindung mit der Batterie zu einem Zeitpunkt wiederherstellt, der als Funktion der besagten Ladezeitdauer und der besagten Übertragungszeit definiert ist.

6. Zähler nach Anspruch 4 oder 5, umfassend ferner einen Gleichspannungswandler, der zwischen dem Ladepack und dem Übertragungssystem angeschlossen ist, um das Übertragungssystem mit einer konstanten Versorgungsspannung zu versorgen, die niedriger als die Ladungsspannung ist, wobei der besagte Gleichspannungswandler mit der Steuereinheit (7) in Wirkverbindung steht, wobei die Steuereinheit derart zur Steuerung des Gleichspannungswandlers eingerichtet ist, dass das Übertragungssystem von dem Batteriepack getrennt wird, wenn das Übertragungssystem nicht in Betrieb ist.

7. Zähler nach einem der vorstehenden Ansprüche, wobei das Ladepack N in Reihe geschaltete Superkondensatoren (Supercaps) umfasst und wobei der spezifische Ladungswert auf NVmax gesetzt ist, wobei N eine ganze Zahl größer oder gleich 2, vorzugsweise gleich 2, ist, und wobei Vmax die maximale Nennspannung ist, die von einem der genannten Superkondensatoren unterstützt wird, ohne dass er beschädigt wird.

8. Zähler nach einem der vorstehenden Ansprüche, wobei die Steuereinheit für den Standby-Betrieb und das Aufwachen nach einer Zeitdauer, die von der Differenz der Gasdurchflüsse abhängig ist, die in mindestens zwei vorhergehenden Messungen ermittelt wurden, zu einer Messung des dem Benutzer zugeführten Gasdurchflusses eingerichtet ist, wobei sie insbesondere dafür eingerichtet ist, häufiger aufzuwachen, wenn ein Gradient in den Durchflüssen detektiert wird, der größer ist als ein Schwellenwert.

9. Zähler nach einem der vorstehenden Ansprüche, wobei die Steuereinheit zwei miteinander verbundene Mikrocontroller umfasst, wobei ein erster Mikrocontroller für die Datenübertragung und ein zweiter Mikrocontroller für die Messtechnik bestimmt ist, wobei der zweite Mikrocontroller eine Architektur mit einer geringeren Leistungsaufnahme als der erste aufweist.

10. Zähler nach einem der vorstehenden Ansprüche, wobei die Messschaltung (6) über einen von der Steuereinheit (7) steuerbaren Strombegrenzer (18) mit der Batterie verbunden ist.

11. Zähler nach Anspruch 10, wobei der Begrenzer (18) einen Bypass-Widerstand aufweist, um den Sensor nicht vollständig abzuschalten, sondern ihn in Standby zu halten.

12. Verfahren zur Übertragung von Messwerten des Gasverbrauchs im Gaszähler nach einem der vorstehenden Ansprüche, wobei das Verfahren die Schritte umfasst:
- Erzeugung einer Versorgungsspannung mittels einer Batterie,
- gesteuertes Aufladen des Ladepacks, um eine bestimmte Energie innerhalb einer bestimmten Übertragungszeit speichern,
- Trennen des Ladepacks von der Batterie zur Übertragungszeit,
- Übertragung von Verbrauchsmesswerten, wobei nur die Energie verwendet wird, die in besagtem Ladepack gespeichert ist.

13. Verfahren nach Anspruch 12, wobei das Aufladen des Ladepacks mittels einer Spannung erfolgt, die größer ist als die von der Batterie bereitgestellte Versorgungsspannung, und mit einem konstant geregelten Strom.

## Revendications

1. Compteur de gaz statique (1) comprenant:
- un circuit de mesure (6) pour détecter un écoulement de gaz fourni à un utilisateur,
- un système d'émission sans fil (8) pour émettre des mesures effectuées par le circuit de mesure,
- une unité de commande (7) conçue pour recevoir les mesures provenant du circuit de mesure (6) et pour commander le système d'émission sans fil (8) afin d'émettre les mesures,
- une batterie (11) conçue pour générer une tension d'alimentation électrique afin d'alimenter l'unité de commande (7), le circuit de mesure (6) et le système d'émission sans fil (8), **caractérisé par le fait qu'**il comprend en outre
- un groupe de charge (13) en parallèle du système d'émission (8) pour stocker de l'énergie à libérer au système d'émission sans fil (8) en cas de besoin, et
- un système de régulation de tension (14, 15, 16) relié de manière fonctionnelle entre la batterie (11) et le groupe de charge (13),
et **par le fait que** le circuit de mesure (6) et l'unité de commande (7) sont reliés de manière fonctionnelle à la batterie (11) de manière à recevoir la puissance provenant de la batterie en amont du système de régulation de tension (14, 15, 16),
et **par le fait que** l'unité de commande (7) est conçue pour commander le système de régulation de tension (14, 15, 16) de manière à réguler la charge du groupe de charge (13).

2. Compteur selon la revendication 1, dans lequel le système de régulation de tension (14, 15, 16) comprend un circuit survolteur pour charger le circuit de charge à une tension supérieure à la tension d'alimentation électrique fournie par la batterie (11).

3. Compteur selon la revendication 2, dans lequel l'unité de commande (7) est conçue pour détecter une tension de charge aux extrémités du groupe de charge (13) et pour commander le circuit survolteur de manière à amener la tension de charge depuis la valeur détectée à une valeur spécifique, supérieure à la tension d'alimentation électrique, dans un temps d'émission spécifique.

4. Compteur selon la revendication 3, dans lequel le circuit survolteur est conçu pour limiter le courant fourni au groupe de charge.

5. Compteur selon la revendication 4, dans lequel l'unité de commande est conçue pour déconnecter le circuit survolteur de la batterie après ledit temps spécifique, et une fois que l'émission s'est produite, pour calculer une période de temps de charge nécessaire pour amener la tension de charge depuis la valeur détectée après l'émission à ladite valeur spécifique et pour restaurer la connexion avec la batterie à un temps défini en fonction de ladite période de temps de charge et dudit temps d'émission.

6. Compteur selon la revendication 4 ou 5, comprenant en outre un convertisseur continu-continu relié entre le groupe de charge et le système d'émission afin de fournir au système d'émission une tension d'alimentation électrique constante inférieure à celle de charge, ledit convertisseur continu-continu étant relié de manière fonctionnelle à l'unité de commande (7), ladite unité de commande étant configurée pour commander ledit convertisseur continu-continu de manière à déconnecter le système d'émission du groupe de batterie lorsque le système d'émission n'est pas en fonctionnement.

7. Compteur selon l'une quelconque des revendications précédentes, dans lequel le groupe de charge comprend N super-condensateurs reliés en série et dans lequel ladite valeur de charge spécifique est définie à NVmax, où N est un nombre entier supérieur ou égal à 2, de préférence égal à 2, et où Vmax est la tension nominale maximale supportée par l'un desdits super-condensateurs sans qu'il ne soit endommagé.

8. Compteur selon l'une quelconque des revendications précédentes, dans lequel l'unité de commande est conçue pour passer en veille et pour sortir de veille afin de prendre une mesure de l'écoulement de gaz fourni à l'utilisateur après une période de temps dépendant de la différence des écoulements de gaz détectés dans au moins deux mesures précédentes, en particulier il est conçu pour sortir de veille plus fréquemment si un gradient dans les écoulements supérieur à un seuil est détecté.

9. Compteur selon l'une quelconque des revendications précédentes, dans lequel l'unité de commande comprend deux microcontrôleurs reliés l'un à l'autre, un premier microcontrôleur étant dédié à l'émission de données et un second microcontrôleur à la métrologie, le second microcontrôleur ayant une architecture avec une consommation d'énergie inférieure à celle du premier.

10. Compteur selon l'une quelconque des revendications précédentes, dans lequel le circuit de mesure (6) est relié à la batterie par un limiteur de courant (18) commandable par l'unité de commande (7).

11. Compteur selon la revendication 10, dans lequel le limiteur (18) comprend une résistance de dérivation pour ne pas complètement éteindre le capteur mais pour le maintenir en veille.

12. Procédé pour transmettre des mesures de consommations de gaz dans le compteur de gaz selon l'une quelconque des revendications précédentes, le procédé comprenant les étapes suivantes :
- générer une tension d'alimentation électrique au moyen d'une batterie,
- charger de manière commandée le groupe de charge de manière à stocker une énergie spécifique dans un temps d'émission spécifique,
- au temps d'émission, déconnecter le groupe de charge de la batterie,
- émettre des mesures de consommations en utilisant uniquement l'énergie stockée dans ledit groupe de charge.

13. Procédé selon la revendication 12, dans lequel la charge du groupe de charge se produit à une tension supérieure à la tension d'alimentation électrique fournie par la batterie et à un courant commandé constant.
